# EUROPÄISCHE PATENTANMELDUNG

(11) **EP 4 096 182 A1**
(43) Veröffentlichungstag der Anmeldung: **30.11.2022**
(21) Anmeldenummer: 21176125.9
(22) Anmeldetag: 27.05.2021
(51) Int. Cl.: H04L 29/06

(54) **VERFAHREN ZUR GESICHERTEN EINRÄUMUNG EINES ZUGRIFFS AUF DATEN UND/ODER RESSOURCEN UND GATEWAY-KOMPONENTE**

(71) Anmelder: Siemens Aktiengesellschaft, 80333 München (DE)
(72) Erfinder: Becker, Stefan, 91325 Adelsdorf (DE); Blöcher, Uwe, 82178 Puchheim (DE); Falk, Rainer, 85586 Poing (DE); Filor, Daniel, 91341 Röttenbach (DE); Gebert, Dirk, 90475 Nürnberg (DE); Knebel, Achim, 90765 Fürth (DE); Pfau, Axel, 80333 München (DE); Schönemann, Peter, 90489 Nürnberg (DE)

(57) **Zusammenfassung**

Die Erfindung betrifft ein Verfahren zur gesicherten Einräumung eines Zugriffs auf Daten und/oder Ressourcen innerhalb eines Kommunikationssystems, das in mehrere Sicherheitszonen (101-103) unterteilt ist, die jeweils eine Mehrzahl von physikalisch und/oder logisch miteinander verbundenen Geräten (111-114, 121-125, 131-133) umfassen. Derselben Sicherheitszone zugeordnete ausgewählte Geräte tauschen untereinander ungeschützte Daten aus und autorisieren einen Zugriff auf Daten und/oder Ressourcen implizit. Eine Gateway-Komponente oder eine der jeweiligen Sicherheitszone zugeordnete Überprüfungsinstanz fordert zur Einräumung eines Zugriffs von externen Geräten außerhalb der Sicherheitszone auf durch zumindest ausgewählte Geräte der Sicherheitszone bereitgestellte Daten und/oder Ressourcen für die externen Geräte und/oder dortige Nutzer Identitätsnachweise sowie Zugriffsberechtigungsnachweise anfordert und überprüft diese anhand von Sicherheitsrichtlinien. Bei erfolgreicher Validierung der Identitätsnachweise und Zugriffsberechtigungsnachweise werden zwischen zumindest ausgewählten Geräten unterschiedlicher Sicherheitszonen mittels der jeweiligen Gateway-Komponenten jeweils kryptographisch geschützte Verbindungen (140) zur Übermittlung von Daten und/oder zum Zugriff auf Ressourcen aufgebaut.

## Beschreibung

Die vorliegende Erfindung betrifft ein Verfahren zur gesicherten Einräumung eines Zugriffs auf Daten bzw. Ressourcen innerhalb eines Kommunikationssystems, insbesondere innerhalb eines Kommunikationssystems eines industriellen Automatisierungssystems, und eine Gateway-Komponente. Die Gateway-Komponente ist zur Durchführung des erfindungsgemäßen Verfahrens geeignet bzw. vorgesehen.

Industrielle Automatisierungssysteme umfassen üblicherweise eine Vielzahl von über ein industrielles Kommunikationsnetz miteinander vernetzten Automatisierungsgeräten und dienen im Rahmen einer Fertigungs- oder Prozessautomatisierung zur Steuerung, Regelung oder Überwachung von Anlagen, Maschinen bzw. Geräten. Aufgrund zeitkritischer Rahmenbedingungen in industriellen Automatisierungssystemen werden zur Kommunikation zwischen Automatisierungsgeräten überwiegend Echtzeit-Kommunikationsprotokolle, wie PROFINET, PROFIBUS, Real-Time-Ethernet oder Time-Sensitive Networking (TSN), verwendet. Insbesondere können Steuerungsdienste bzw. -anwendungen automatisiert und auslastungsabhängig auf aktuell verfügbare Server oder virtuelle Maschinen eines industriellen Automatisierungssystems verteilt werden.

Aus WO 2019/042915 A1 ist ein Verfahren zur Überprüfung von innerhalb eines industriellen Automatisierungssystems mit mehreren Automatisierungszellen übermittelten Datagrammen bekannt, bei dem zu überprüfende Datagramme aus den Automatisierungszellen über eine jeweilige Firewall-Schnittstelle zur Überprüfung an Firewall-System übermittelt und dort regelbasiert überprüft werden. Das Firewall-System wird durch zumindest eine innerhalb eines mehrere Rechnereinheiten umfassenden Datenverarbeitungssystems bereitgestellte virtuelle Maschine gebildet. Zur Übermittlung der zu überprüfenden Datagramme wird jeweils ein Sicherungsschicht-Tunnel zwischen der jeweiligen Firewall-Schnittstelle und dem Firewall-System aufgebaut. Sowohl zu prüfende Datagramme als auch zumindest erfolgreich überprüfte Datagramme werden innerhalb des jeweiligen Sicherungsschicht-Tunnels übermittelt.

In WO 2020/182627 A1 ist ein Verfahren zur Überwachung der Integrität eines industriellen Cyber-physischen Systems beschrieben, bei dem Messdaten, die mit verschiedenen Sensoren des Cyber-physischen Systems erfasst wurden, bzw. Steuerdaten, die für verschiedene Aktuatoren des Cyber-physischen Systems bestimmt sind, bereitgestellt bzw. abgegriffen werden. Außerdem wird wenigstens ein Messdaten-Zusammenhangsparameter zwischen den mit den verschiedenen Sensoren erfassten Messdaten ermittelt, bzw. es wird wenigstens ein Steuerdaten-Zusammenhangsparameter zwischen den für die verschiedenen Aktuatoren bestimmten Steuerdaten ermittelt. Der wenigstens eine Messdaten-Zusammenhangsparameter wird mit einer Messdaten-Zusammenhangs-Referenz verglichen, bzw. der wenigstens eine Steuerdaten-Zusammenhangsparameter wird mit einer Steuerdaten-Zusammenhangs-Referenz verglichen. Basierend auf dem Vergleich wird die Integrität des zu überwachenden Cyber-physischen Systems beurteilt.

WO 2020/212051 A1 betrifft ein industrielles Automatisierungsgerät, das eine Überwachungseinheit zur Überprüfung und Überwachung des Integritätszustandes des industriellen Automatisierungsgerätes umfasst. Außerdem ist zumindest eine Gerätekomponente vorgesehen, die rückwirkungsfrei über eine Kommunikationsverbindung mit der Überwachungseinheit kommuniziert. Dabei umfasst die rückwirkungsfreie Kommunikation ein Bereitstellen wenigstens eines Gerätekomponentenparameters von der Gerätekomponente an die Überwachungseinheit. Die Überwachungseinheit ist dazu ausgebildet, den bereitgestellten Gerätekomponentenparameter der Gerätekomponente des industriellen Automatisierungsgerätes zur Überprüfung und Überwachung des Integritätszustandes des industriellen Automatisierungsgerätes zu protokollieren und zu verarbeiten. Des Weiteren ist die Überwachungseinheit dazu ausgebildet, den Integritätszustand des industriellen Automatisierungsgerätes als Ergebnis des verarbeiteten Gerätekomponentenparameters der Gerätekomponente des industriellen Automatisierungsgerätes zu protokollieren bzw. bereitzustellen. Darüber hinaus ist die Überwachungseinheit als eine vertrauenswürdige Gerätekomponente durch einen Manipulationsschutz manipulationsgeschützt in dem industriellen Automatisierungsgerät ausgebildet.

Zero Trust-Konzepte sehen vor, dass sich Benutzer bzw. Geräte unabhängig von ihrer jeweiligen Position oder Umgebung sich gegenüber Kommunikationspartner bzw. bei einem Zugriff auf geschützte Ressourcen authentisieren, um nach einer erfolgreichen Authentifizierung beispielsweise auf gewünschte Daten oder Anwendungen zugreifen zu können. Allerdings findet eine Anwendung von reinen Zero Trust-Konzepten Grenzen in Anwendungsgebieten, in denen nicht jeder Benutzer oder jedes Gerät in der Lage sind, insbesondere unter wirtschaftlichen Rahmenbedingungen, eine sichere Authentifizierung gewährleisten zu können. Insbesondere in industriellen Automatisierungssystemen mit bereits über einen längeren Zeitraum genutzten Bestandskomponenten ist dies vielfach ein Problem.

Der vorliegenden Erfindung liegt daher die Aufgabe zugrunde, ein aufwandsarm in bestehende Umgebungen integrierbares Verfahren zur gesicherten Einräumung eines Zugriffs auf Daten bzw. Ressourcen innerhalb eines Kommunikationssystems, insbesondere innerhalb eines industriellen Automatisierungssystems, zu schaffen und geeignete Komponenten zur technischen Realisierung des Verfahrens anzugeben.

Diese Aufgabe wird erfindungsgemäß durch ein Verfahren mit den in Anspruch 1 angegebenen Merkmalen und durch eine Gateway-Komponente mit den in Anspruch 16 angegebenen Merkmalen gelöst. Vorteilhafte Weiterbildungen der vorliegenden Erfindung sind in den abhängigen Ansprüchen angegeben.

Entsprechend dem erfindungsgemäßen Verfahren zur gesicherten Einräumung eines Zugriffs auf Daten bzw. Ressourcen innerhalb eines Kommunikationssystems ist das Kommunikationssystem in mehrere Sicherheitszonen unterteilt, die jeweils eine Mehrzahl von physikalisch bzw. logisch miteinander verbundenen Geräten umfassen. Derselben Sicherheitszone zugeordnete ausgewählte Geräte tauschen untereinander ungeschützte Daten aus und autorisieren einen Zugriff auf Daten bzw. Ressourcen implizit. Dabei umfasst jede Sicherheitszone zumindest eine Gateway-Komponente. Die Sicherheitszonen sind vorzugsweise Software-definiert und dynamisch anpassbar. Insbesondere können die Sicherheitszonen jeweils mittels eines Virtual Private Network (VPN) oder mittels Virtual Extensible LAN-Verbindungen (VXLAN) gebildet werden, die durch die jeweilige Gateway-Komponente zwischen den Geräten aufgebaut werden, die derselben Sicherheitszone zugeordnet sind.

Die Gateway-Komponente oder eine der jeweiligen Sicherheitszone zugeordnete Überprüfungsinstanz fordert zur Einräumung eines Zugriffs von externen Geräten außerhalb der Sicherheitszone auf durch zumindest ausgewählte Geräte der Sicherheitszone bereitgestellte Daten bzw. Ressourcen für die externen Geräte bzw. dortige Nutzer erfindungsgemäß Identitätsnachweise sowie Zugriffsberechtigungsnachweise an und überprüft diese anhand von Sicherheitsrichtlinien. Dabei definieren die Sicherheitsrichtlinien, welche Geräte bzw. Nutzer Zugriff auf welche Daten bzw. Ressourcen benötigen, insbesondere welche Zugriffe zulässig sind. Die Identitätsnachweise umfassen vorzugsweise jeweils eine gerätebezogene und eine nutzerbezogene Authentisierung. Die Zugriffsberechtigungsnachweise können beispielsweise jeweils ein Passwort, ein Verifiable Credential, eine Verifiable Presentation einer oder mehrerer Verifiable Credentials bzw. ein Security Token umfassen.

Eine Sicherheitsrichtlinie (Security Policy, auch Sicherheitspolitik) ist üblicherweise ein technisches bzw. organisatorisches Dokument, mit dem in Unternehmen oder Institutionen bestehende Sicherheitsansprüche umgesetzt und erreicht werden sollen. Kernbestandteile sind insbesondere eine Sicherstellung von Integrität, Vertraulichkeit, Verfügbarkeit bzw. Authentizität zu schützender Informationen. Eine Sicherheitsrichtlinie für eine Firewall legt beispielsweise fest, wie eine konkrete Konfiguration erfolgt, welche Zugriffsrechte erteilt werden, wie eine Protokollierung erfolgt oder welche Abwehrmaßnahmen die Firewall in einem Angriffsszenario trifft. Eine Sicherheitsrichtlinie kann insbesondere als Konfigurationsdatei, als XML-Datei, als eine Gerätekonfiguration vorliegen, die unmittelbar maschinell auswertbar ist. Ebenso ist es möglich, dass eine Sicherheitsrichtlinie in textueller Form vorliegt, die mittels auf künstlicher Intelligenz oder maschinellem Lernen basierender Verfahren ausgewertet wird. Außerdem ist es möglich, dass eine Sicherheitsrichtlinie in graphischer Form vorliegt, die mittels Bildverarbeitungs- bzw. Mustererkennungsverfahren ausgewertet wird.

Die Identitätsnachweise und Zugriffsberechtigungsnachweise für zumindest ausgewählte externe Geräte werden erfindungsgemäß jeweils durch die Gateway-Komponente oder Überprüfungsinstanz derjenigen Sicherheitszone bereitgestellt, die das jeweilige ausgewählte externe Gerät umfasst. Zwischen zumindest ausgewählten Geräten unterschiedlicher Sicherheitszonen werden mittels der jeweiligen Gateway-Komponenten bei erfolgreicher Validierung der Identitätsnachweise und Zugriffsberechtigungsnachweise jeweils kryptographisch geschützte Verbindungen zur Übermittlung von Daten bzw. zum Zugriff auf Ressourcen aufgebaut. Vorzugsweise erhalten Geräte bzw. Nutzer, die einen Zugriff auf Geräten anderer Sicherheitszonen zugeordnete Daten bzw. Ressourcen anfordern, bei erfolgreicher Validierung ihrer Identitätsnachweise und Zugriffsberechtigungsnachweise mittels der kryptographisch geschützten Verbindungen jeweils ausschließlich Zugriff auf Daten bzw. Ressourcen in der jeweiligen anderen Sicherheitszone, für die ein Zugriff angefordert worden ist. Dies gilt insbesondere, soweit ein Zugriff entsprechend der Sicherheitsrichtlinie, die der jeweiligen anderen Sicherheitszone zugeordnet ist, als zulässig definiert ist.

Insgesamt ermöglicht die vorliegende Erfindung eine flexible Definition von Sicherheitszonen, ohne hierbei Einschränkungen durch bestehende Peripherieanbindungen oder eine bestehende physikalische Verkabelungstopologie unterworfen zu sein. Insbesondere bei einer Umstellung von Produktionslinien in industriellen Automatisierungssystemen ist dies ein Vorteil. Gleichzeitig ist der vorliegenden Erfindung eine nahtlose Weiterverwendung bzw. Integration bestehender Zellschutzkonzepte in Zero Trust Architekturen möglich. Erzielt wird dies durch eine Sicherheitsrichtlinien-basierte Überprüfung von Identitätsnachweisen und Zugriffsberechtigsnachweisen für grundsätzlich sämtliche Geräte bzw. Nutzer bei Zugriff auf Daten bzw. Ressourcen in fremden Sicherheitszonen, insbesondere durch eine feingranulare Einräumung von Zugriffsberechtigungen.

Ausgewählte Sicherheitszonen können beispielsweise weitere unterlagerte Sicherheitszonen umfassen. In diesem Fall überprüfen die Gateway-Komponenten der ausgewählten Sicherheitszonen für einen Zugriff auf unterlagerte Sicherheitszonen vorteilhafterweise jeweils zusätzlich anhand von Zonen-Sicherheitsrichtlinien, ob und in welchem Umfang anfragende Geräte bzw. Nutzer für einen Zugriff auf Daten bzw. Ressourcen der jeweiligen unterlagerten Sicherheitszone zugelassen sind. Dabei können die Gateway-Komponenten der ausgewählten Sicherheitszonen entsprechend einer Überprüfung anhand der Zonen-Sicherheitsrichtlinien jeweils einen Zugriff auf sämtliche unterlagerte Sicherheitszonen, auf einzelne unterlagerte Sicherheitszonen oder auf ausgewählte Daten bzw. Ressourcen eines Geräts einer unterlagerten Sicherheitszone zulassen.

Entsprechend einer besonders vorteilhaften Ausgestaltung der vorliegenden Erfindung agieren die Gateway-Komponenten jeweils als Security Agenten insbesondere für Geräte, die Kryptographiefunktionen oder Security Funktionen zum Bereitstellen oder zur Überprüfung von Identitätsnachweisen oder Zugriffsberechtigungsnachweisen nicht oder nur eingeschränkt unterstützen. Dabei werden die von einer externen Gateway-Komponente oder Überprüfungsinstanz bereitgestellten Identitätsnachweise und Zugriffsberechtigungsnachweise bei einem Zugriff auf zumindest ausgewählte interne Geräte vor oder bei dem Zugriff jeweils durch die Gateway-Komponente oder Überprüfungsinstanz der Sicherheitszone überprüft, die das jeweilige ausgewählte interne Gerät umfasst. Insbesondere implementieren die Gateway-Komponenten für eine Auswertung und Umsetzung der Sicherheitsrichtlinien jeweils einen Policy Decision Point bzw. einen Policy Enforcement Point.

Vorzugsweise fordert die jeweilige Gateway-Komponente oder Überprüfungsinstanz zur Einräumung des Zugriffs von externen Geräten außerhalb der Sicherheitszone auf durch sämtliche Geräte der jeweiligen Sicherheitszone bereitgestellte Daten bzw. Ressourcen für die externen Geräte bzw. dortige Nutzer jeweils Identitätsnachweise sowie Zugriffsberechtigungsnachweise an und überprüft diese anhand der Sicherheitsrichtlinien. Auf diese Weise wird eine einheitliche Anwendung der Sicherheitsrichtlinien sichergestellt. Dabei werden die Identitätsnachweise und Zugriffsberechtigungsnachweise für sämtliche externe Geräte vorteilhafterweise jeweils durch diejenige Gateway-Komponente der Sicherheitszone bereitgestellt, die das jeweilige externe Gerät umfasst. Entsprechend einer weiteren bevorzugten Ausgestaltung werden ausnahmslos zwischen Geräten unterschiedlicher Sicherheitszonen mittels der jeweiligen Gateway-Komponenten bei erfolgreicher Validierung der Identitätsnachweise und Zugriffsberechtigungsnachweise jeweils kryptographisch geschützte Verbindungen zur Übermittlung von Daten bzw. zum Zugriff auf Ressourcen aufgebaut. Dies ermöglicht eine besonders sichere Implementierung der vorliegenden Erfindung.

Entsprechend einer besonders bevorzugten Weiterbildung der vorliegenden Erfindung fordert die jeweilige Gateway-Komponente oder Überprüfungsinstanz zur Einräumung des Zugriffs von externen Geräten außerhalb der Sicherheitszone auf durch sämtliche Geräte der jeweiligen Sicherheitszone bereitgestellte Daten bzw. Ressourcen für die externen Geräte bzw. dortige Nutzer zusätzlich jeweils eine Bestätigung einer Security Konfiguration des jeweiligen externen Geräts bzw. Angaben über ausgewählte Geräte- bzw. Nutzerattribute an und überprüft diese anhand der Sicherheitsrichtlinien. Dies ermöglicht eine nochmals erhöhte Sicherheit. Vorteilhafterweise wird die Bestätigung der Security Konfiguration bzw. die Angaben über die ausgewählten Geräte- bzw. Nutzerattribute für sämtliche externe Geräte jeweils durch die Gateway-Komponente der Sicherheitszone bereitgestellt, der die jeweiligen externen Geräte zugeordnet sind.

Die erfindungsgemäße Gateway-Komponente ist zur Durchführung eines Verfahrens entsprechend vorangehenden Ausführungen vorgesehen und dafür ausgestaltet, einer Sicherheitszone eines Kommunikationssystems zugeordnet zu werden, das in mehrere Sicherheitszonen unterteilt ist, die jeweils eine Mehrzahl von physikalisch bzw. logisch miteinander verbundenen Geräten umfassen. Außerdem ist die Gateway-Komponente dafür ausgestaltet, zur Einräumung eines Zugriffs von externen Geräten außerhalb der Sicherheitszone auf durch zumindest ausgewählte Geräte der Sicherheitszone bereitgestellte Daten bzw. Ressourcen für die externen Geräte bzw. dortige Nutzer Identitätsnachweise sowie Zugriffsberechtigungsnachweise anzufordern und anhand von Sicherheitsrichtlinien zu überprüfen. Dabei definieren die Sicherheitsrichtlinien, welche Geräte bzw. Nutzer Zugriff auf welche Daten bzw. Ressourcen benötigen, insbesondere welche Zugriffe zulässig sind.

Darüber hinaus ist die erfindungsgemäße Gateway-Komponente dafür ausgestaltet, Identitätsnachweise und Zugriffsberechtigungsnachweise für zumindest ausgewählte Geräte bereitzustellen, die von der Sicherheitszone umfasst sind, der die Gateway-Komponente zugeordnet ist, sowie zwischen zumindest ausgewählten Geräten unterschiedlicher Sicherheitszonen bei erfolgreicher Validierung der Identitätsnachweise und Zugriffsberechtigungsnachweise jeweils kryptographisch geschützte Verbindungen zur Übermittlung von Daten bzw. zum Zugriff auf Ressourcen aufzubauen.

Die vorliegende Erfindung wird nachfolgend an einem Ausführungsbeispiel anhand der Zeichnung näher erläutert. Es zeigt
- Figur 1: ein Kommunikationssystem mit mehreren Sicherheitszonen, die jeweils eine Mehrzahl von physikalisch bzw. logisch miteinander verbundenen Geräten umfassen,
- Figur 2: ein Ablaufdiagramm für ein Verfahren zur gesicherten Einräumung eines Zugriffs auf Daten bzw. Ressourcen innerhalb des Kommunikationssystems gemäß Figur 1.

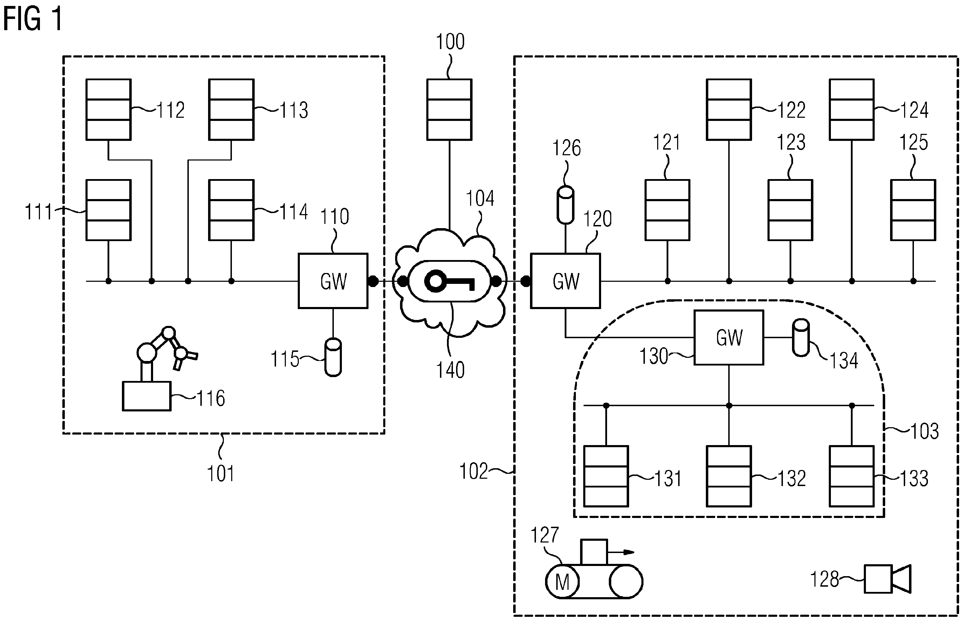

Das Figur 1 dargestellte Kommunikationsnetz umfasst mehrere Sicherheitszonen 101-103, die jeweils die jeweils eine Mehrzahl von physikalisch bzw. logisch miteinander verbundenen Geräten 111-114, 121-125, 131-133 umfassen. Die Sicherheitszonen sind vorteilhafterweise Software-definiert und dynamisch anpassbar. Eine Zonenzuordnung der Geräte 111-114, 121-125, 131-133 kann grundsätzlich konfigurierbar sein. Alternativ kann sie automatisch abhängig von einer aktuellen Gerätekonfiguration, einem Produktionsschritt oder einer Produktionsplanung ermittelt werden. Eine automatische Konfiguration bietet als Vorteil, dass eine Zuordnung von Geräten zu Sicherheitszonen bei einer flexiblen Produktion, insbesondere ab Losgröße 1, automatisch abhängig von einer aktuell vorliegenden Konfiguration eines Automatisierungs- bzw. Produktionssystems ermittelt und umgesetzt werden kann.

Vorzugsweise umfasst jede Sicherheitszone 101-103 eine Gateway-Komponente 110, 120, 130. Die Sicherheitszonen 101-103 werden beispielsweise jeweils mittels eines Virtual Private Network oder mittels Virtual Extensible LAN-Verbindungen gebildet, die durch die jeweilige Gateway-Komponente 110, 120, 130 zwischen den Geräten 111-114, 121-125, 131-133 aufgebaut werden, die derselben Sicherheitszone 101-103 zugeordnet sind. Im vorliegenden Ausführungsbeispiel sind die beiden Sicherheitszonen 101, 102 durch ein IP-basiertes Transitnetz 104 miteinander verbunden.

Die Geräte 111-114, 121-125, 131-133 sind insbesondere physische oder virtuelle Hosts, die Daten bzw. Ressourcen für andere Hosts bereitstellen können. Die Daten bzw. Ressourcen können beispielsweise Diensten bzw. Steuerungs- und Überwachungsanwendungen eines industriellen Automatisierungssystems zugeordnet sein, die exemplarisch für zeitkritische Dienste bzw. Anwendungen sind.

Im vorliegenden Ausführungsbeispiel implementieren die Geräte 111-114, 121-125, 131-133 Funktionen von Steuerungsgeräten eines industriellen Automatisierungssystems, wie speicherprogrammierbaren Steuerungen, oder von Feldgeräten, wie Sensoren oder Aktoren. Dabei dienen die Geräte 111-114, 121-125, 131-133 einem Austausch von Steuerungs- und Messgrößen mit durch Steuerungsgeräte gesteuerten Maschinen oder Vorrichtungen 116, 127-128. Insbesondere sind die Steuerungsgeräte für eine Ermittlung geeigneter Steuerungsgrößen aus erfassten Messgrößen vorgesehen.

Alternativ oder zusätzlich können die Geräte 111-114, 121-125, 131-133 jeweils eine Bedien- und Beobachtungsstation implementieren und zur Visualisierung von Prozessdaten bzw. Mess- und Steuerungsgrößen dienen, die durch Steuerungsgeräte oder andere Automatisierungsgeräte verarbeitet bzw. erfasst werden. Insbesondere kann eine Bedien- und Beobachtungsstation zur Anzeige von Werten eines Regelungskreises und zur Veränderung von Regelungsparametern oder -programmen verwendet werden.

Derselben Sicherheitszone 101-103 zugeordnete Geräte tauschen untereinander ungeschützte Daten aus und autorisieren einen Zugriff auf Daten bzw. Ressourcen implizit aufgrund einer Zugehörigkeit zur selben Sicherheitszone. Zur gesicherten Einräumung eines Zugriffs auf Daten bzw. Ressourcen innerhalb des in Figur 1 dargestellten Kommunikationssystems fordert die jeweilige Gateway-Komponente 110, 120, 130 oder eine der jeweiligen Sicherheitszone 101-103 zugeordnete Überprüfungsinstanz 100 zur Einräumung des Zugriffs von externen Geräten außerhalb der Sicherheitszone 101-103 auf durch Geräte 111-114, 121-125, 131-133 der jeweiligen Sicherheitszone 101-103 bereitgestellte Daten bzw. Ressourcen für die externen Geräte und dortige Nutzer Identitätsnachweise sowie Zugriffsberechtigungsnachweise an. Die Identitätsnachweise umfassen beispielsweise jeweils eine gerätebezogene und eine nutzerbezogene Authentisierung, während die Zugriffsberechtigungsnachweise jeweils ein Passwort, ein Verifiable Credential, eine Verifiable Presentation einer oder mehrerer Verifiable Credentials oder ein Security Token umfassen können.

Vorzugsweise fordert die jeweilige Gateway-Komponente 110, 120, 130 oder Überprüfungsinstanz 100 zur Einräumung des Zugriffs von externen Geräten auf durch sämtliche Geräte 111-114, 121-125, 131-133 der jeweiligen Sicherheitszone 101-103 bereitgestellte Daten bzw. Ressourcen für die externen Geräte und dortigen Nutzer jeweils Identitätsnachweise sowie Zugriffsberechtigungsnachweise an. Die Identitätsnachweise und Zugriffsberechtigungsnachweise werden im vorliegenden Ausführungsbeispiel für sämtliche externe Geräte jeweils durch die Gateway-Komponente 110, 120, 130 der Sicherheitszone 101-103 bereitgestellt, die das jeweilige externe Gerät umfasst.

Entsprechend einer bevorzugten Ausführungsform fordert die jeweilige Gateway-Komponente 110, 120, 130 oder Überprüfungsinstanz 100 zur Einräumung des Zugriffs von externen Geräten für die externen Geräte und dortigen Nutzer zusätzlich jeweils eine Bestätigung einer Security Konfiguration des jeweiligen externen Geräts und Angaben über ausgewählte Geräte- und Nutzerattribute an. Dabei werden die Bestätigung der Security Konfiguration und die Angaben über die ausgewählten Geräte- und Nutzerattribute für sämtliche externe Geräte jeweils vorteilhafterweise durch die Gateway-Komponente 110, 120, 130 der Sicherheitszone 101-103 bereitgestellt, der die jeweiligen externen Geräte zugeordnet sind.

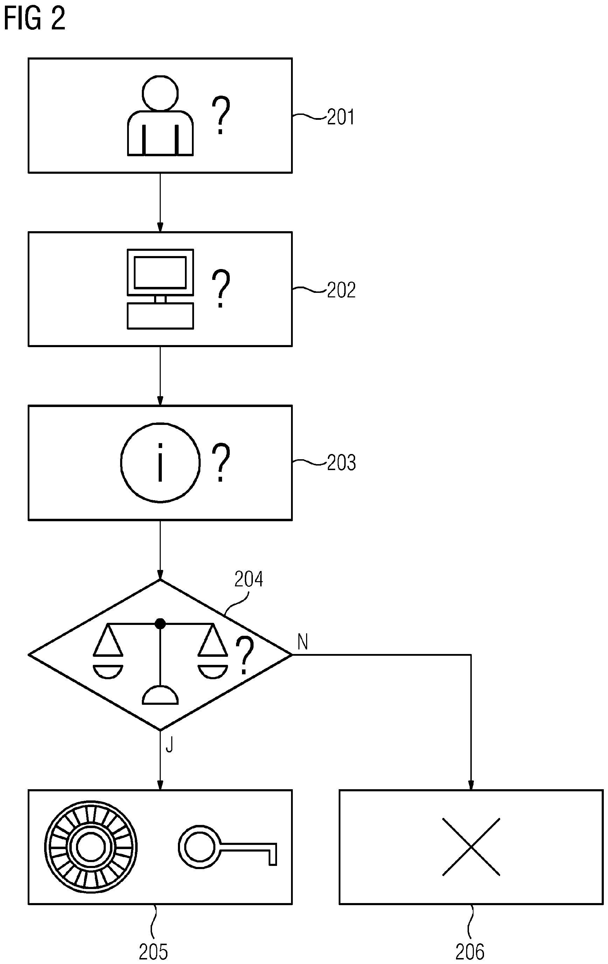

Entsprechend dem in Figur 2 dargestellten Ablaufdiagramm überprüft die jeweilige Gateway-Komponente 110, 120, 130 die angeforderten Identitätsnachweise und Zugriffsberechtigungsnachweise für die Nutzer (Schritt 201) und für die externen Geräte (Schritt 202) und die Bestätigung der Security Konfiguration sowie die Geräte- und Nutzerattribute (Schritt 203) anhand von Sicherheitsrichtlinien. Die Sicherheitsrichtlinien sind jeweils in einer Datenbasis 115, 126, 134 der jeweiligen Gateway-Komponente 110, 120, 130 hinterlegt und definieren, welche Geräte bzw. Nutzer Zugriff auf welche Daten bzw. Ressourcen benötigen, also welche Zugriffe zulässig sind.

Die Identitätsnachweise und Zugriffsberechtigungsnachweise sowie die Bestätigung der Security Konfiguration und die Geräte- und Nutzerattribute werden im vorliegenden Ausführungsbeispiel entsprechend Schritt 204 durch die Gateway-Komponente 110, 120, 130 der Sicherheitszone 101-103 validiert, die das Gerät 111-114, 121-125, 131-133, auf dessen Daten bzw. Ressourcen zugegriffen werden soll. Bei erfolgreicher Validierung werden zur Übermittlung von Daten bzw. zum Zugriff auf Ressourcen zwischen Geräten 111-114, 121-125, 131-133 unterschiedlicher Sicherheitszonen 101-103 mittels der jeweiligen Gateway-Komponenten 110, 120, 139 jeweils entsprechend Schritt 205 kryptographisch geschützte Verbindungen aufgebaut. Beispielsweise kann hierzu zwischen den Sicherheitszonen 101, 102 eine verschlüsselte Verbindung 140 über das Transitnetz 104 aufgebaut werden. Ist die Validierung entsprechend Schritt 204 dagegen nicht erfolgreich, wird der Zugriff entsprechend Schritt 206 verweigert.

Im vorliegenden Ausführungsbeispiel werden zwischen Geräten unterschiedlicher Sicherheitszonen mittels der jeweiligen Gateway-Komponenten bei erfolgreicher Validierung ausnahmslos jeweils kryptographisch geschützte Verbindungen zur Übermittlung von Daten bzw. zum Zugriff auf Ressourcen aufgebaut. Vorzugsweise erhalten Geräte bzw. Nutzer, die einen Zugriff auf Geräten anderer Sicherheitszonen zugeordnete Daten bzw. Ressourcen anfordern, bei erfolgreicher Validierung mittels der kryptographisch geschützten Verbindungen jeweils ausschließlich Zugriff auf Daten bzw. Ressourcen in der jeweiligen anderen Sicherheitszone, für die ein Zugriff angefordert worden ist.

Sicherheitszonen können grundsätzlich weitere unterlagerte Sicherheitszonen umfassen. Im vorliegenden Ausführungsbeispiel umfasst die Sicherheitszone 102 die Sicherheitszone 103. In einem derartigen Fall überprüft die Gateway-Komponente 120 einer überlagerten Sicherheitszone 102 für einen Zugriff auf die unterlagerte Sicherheitszone 103 jeweils zusätzlich anhand von Zonen-Sicherheitsrichtlinien, ob und in welchem Umfang anfragende Geräte bzw. Nutzer für einen Zugriff auf Daten bzw. Ressourcen der jeweiligen unterlagerten Sicherheitszone 103 zugelassen sind. Dabei kann die Gateway-Komponente 120 der überlagerten Sicherheitszone 102 entsprechend einer Überprüfung anhand der Zonen-Sicherheitsrichtlinien jeweils einen Zugriff auf sämtliche unterlagerte Sicherheitszonen, auf einzelne unterlagerte Sicherheitszonen 103 oder selektiv auf ausgewählte Daten bzw. Ressourcen eines Geräts 131-133 einer unterlagerten Sicherheitszone 103 zulassen.

Insgesamt agieren die Gateway-Komponenten 110, 120, 130 vorteilhafterweise jeweils als Security Agenten insbesondere für Geräte, die Kryptographiefunktionen oder Security Funktionen zum Bereitstellen oder zur Überprüfung von Identitätsnachweisen oder Zugriffsberechtigungsnachweisen nicht oder nur eingeschränkt unterstützen. Dabei werden insbesondere die von einer externen Gateway-Komponente oder Überprüfungsinstanz bereitgestellten Identitätsnachweise und Zugriffsberechtigungsnachweise bei einem Zugriff auf interne Geräte vor oder bei dem Zugriff jeweils durch die Gateway-Komponente Überprüfungsinstanz der Sicherheitszone überprüft, die das jeweilige interne Gerät umfasst. Vorzugsweise implementieren die Gateway-Komponenten 110, 120, 130 für eine Auswertung und Umsetzung der Sicherheitsrichtlinien jeweils einen Policy Decision Point bzw. einen Policy Enforcement Point.

## Patentansprüche

1. Verfahren zur gesicherten Einräumung eines Zugriffs auf Daten und/oder Ressourcen innerhalb eines Kommunikationssystems, bei dem
- das Kommunikationssystem in mehrere Sicherheitszonen (101-103) unterteilt ist, die jeweils eine Mehrzahl von physikalisch und/oder logisch miteinander verbundenen Geräten (111-114, 121-125, 131-133) umfassen,
- derselben Sicherheitszone zugeordnete ausgewählte Geräte untereinander ungeschützte Daten austauschen und einen Zugriff auf Daten und/oder Ressourcen implizit autorisieren, wobei jede Sicherheitszone zumindest eine Gateway-Komponente (110, 120, 130) umfasst,
- die Gateway-Komponente oder eine der jeweiligen Sicherheitszone zugeordnete Überprüfungsinstanz zur Einräumung eines Zugriffs von externen Geräten außerhalb der Sicherheitszone auf durch zumindest ausgewählte Geräte der Sicherheitszone bereitgestellte Daten und/oder Ressourcen für die externen Geräte und/oder dortige Nutzer Identitätsnachweise sowie Zugriffsberechtigungsnachweise anfordert und anhand von Sicherheitsrichtlinien überprüft, die definieren, welche Geräte und/oder Nutzer Zugriff auf welche Daten und/oder Ressourcen benötigen,
- die Identitätsnachweise und Zugriffsberechtigungsnachweise für zumindest ausgewählte externe Geräte jeweils durch die Gateway-Komponente oder Überprüfungsinstanz derjenigen Sicherheitszone bereitgestellt werden, die das jeweilige ausgewählte externe Gerät umfasst,
- zwischen zumindest ausgewählten Geräten unterschiedlicher Sicherheitszonen mittels der jeweiligen Gateway-Komponenten bei erfolgreicher Validierung der Identitätsnachweise und Zugriffsberechtigungsnachweise jeweils kryptographisch geschützte Verbindungen (140) zur Übermittlung von Daten und/oder zum Zugriff auf Ressourcen aufgebaut werden.

2. Verfahren nach Anspruch 1,
bei dem die Sicherheitszonen Software-definiert und dynamisch anpassbar sind.

3. Verfahren nach Anspruch 2,
bei dem die Sicherheitszonen jeweils mittels eines Virtual Private Network oder mittels Virtual Extensible LAN-Verbindungen gebildet werden, die durch die jeweilige Gateway-Komponente zwischen den Geräten aufgebaut werden, die derselben Sicherheitszone zugeordnet sind.

4. Verfahren nach einem der Ansprüche 1 bis 3,
bei dem ausgewählte Sicherheitszonen weitere unterlagerte Sicherheitszonen umfassen und bei dem die Gateway-Komponenten der ausgewählten Sicherheitszonen für einen Zugriff auf unterlagerte Sicherheitszonen jeweils zusätzlich anhand von Zonen-Sicherheitsrichtlinien überprüfen, ob und in welchem Umfang anfragende Geräte und/oder Nutzer für einen Zugriff auf Daten und/oder Ressourcen der jeweiligen unterlagerten Sicherheitszone zugelassen sind.

5. Verfahren nach Anspruch 4,
bei dem die Gateway-Komponenten der ausgewählten Sicherheitszonen entsprechend einer Überprüfung anhand der Zonen-Sicherheitsrichtlinien jeweils einen Zugriff auf sämtliche unterlagerte Sicherheitszonen, auf einzelne unterlagerte Sicherheitszonen oder auf ausgewählte Daten und/oder Ressourcen eines Geräts einer unterlagerten Sicherheitszone zulassen.

6. Verfahren nach einem der Ansprüche 1 bis 5,
bei dem die Identitätsnachweise jeweils eine gerätebezogene und eine nutzerbezogene Authentisierung umfassen.

7. Verfahren nach einem der Ansprüche 1 bis 6,
bei dem die Zugriffsberechtigungsnachweise jeweils ein Passwort, ein Verifiable Credential, eine Verifiable Presentation einer oder mehrerer Verifiable Credentials und/oder und ein Security Token umfassen.

8. Verfahren nach einem der Ansprüche 1 bis 7,
bei dem die Gateway-Komponenten jeweils als Security Agenten insbesondere für Geräte agieren, die Kryptographiefunktionen oder Security Funktionen zum Bereitstellen oder zur Überprüfung von Identitätsnachweisen oder Zugriffsberechtigungsnachweisen nicht oder nur eingeschränkt unterstützen, und bei dem die von einer externen Gateway-Komponente oder Überprüfungsinstanz bereitgestellten Identitätsnachweise und Zugriffsberechtigungsnachweise bei einem Zugriff auf zumindest ausgewählte interne Geräte vor oder bei dem Zugriff jeweils durch die Gateway-Komponente oder Überprüfungsinstanz der Sicherheitszone überprüft werden, die das jeweilige ausgewählte interne Gerät umfasst.

9. Verfahren nach Anspruch 8,
bei dem die Gateway-Komponenten für eine Auswertung und Umsetzung der Sicherheitsrichtlinien jeweils einen Policy Decision Point und/oder einen Policy Enforcement Point implementieren.

10. Verfahren nach einem der Ansprüche 1 bis 9,
bei dem die jeweilige Gateway-Komponente oder Überprüfungsinstanz zur Einräumung des Zugriffs von externen Geräten außerhalb der Sicherheitszone auf durch sämtliche Geräte der jeweiligen Sicherheitszone bereitgestellte Daten und/oder Ressourcen für die externen Geräte und/oder dortige Nutzer jeweils Identitätsnachweise sowie Zugriffsberechtigungsnachweise anfordert und anhand der Sicherheitsrichtlinien überprüft.

11. Verfahren nach einem der Ansprüche 1 bis 10,
bei dem die Identitätsnachweise und Zugriffsberechtigungsnachweise für sämtliche externe Geräte jeweils durch die Gateway-Komponente derjenigen Sicherheitszone bereitgestellt werden, die das jeweilige externe Gerät umfasst.

12. Verfahren nach einem der Ansprüche 1 bis 11,
bei dem ausnahmslos zwischen Geräten unterschiedlicher Sicherheitszonen mittels der jeweiligen Gateway-Komponenten bei erfolgreicher Validierung der Identitätsnachweise und Zugriffsberechtigungsnachweise jeweils kryptographisch geschützte Verbindungen zur Übermittlung von Daten und/oder zum Zugriff auf Ressourcen aufgebaut werden.

13. Verfahren nach einem der Ansprüche 1 bis 12,
bei dem Geräte und/oder Nutzer, die einen Zugriff auf Geräten anderer Sicherheitszonen zugeordnete Daten und/oder Ressourcen anfordern, bei erfolgreicher Validierung ihrer Identitätsnachweise und Zugriffsberechtigungsnachweise mittels der kryptographisch geschützten Verbindungen jeweils ausschließlich Zugriff auf Daten und/oder Ressourcen in der jeweiligen anderen Sicherheitszone erhalten, für die ein Zugriff angefordert worden ist.

14. Verfahren nach einem der Ansprüche 1 bis 13,
bei dem die jeweilige Gateway-Komponente oder Überprüfungsinstanz zur Einräumung des Zugriffs von externen Geräten außerhalb der Sicherheitszone auf durch sämtliche Geräte der jeweiligen Sicherheitszone bereitgestellte Daten und/oder Ressourcen für die externen Geräte und/oder dortige Nutzer zusätzlich jeweils eine Bestätigung einer Security Konfiguration des jeweiligen externen Geräts und/oder Angaben über ausgewählte Geräte- und/oder Nutzerattribute anfordert und diese anhand der Sicherheitsrichtlinien überprüft.

15. Verfahren nach Anspruch 14,
bei dem die Bestätigung der Security Konfiguration und/oder die Angaben über die ausgewählten Geräte- und/oder Nutzerattribute für sämtliche externe Geräte jeweils durch die Gateway-Komponente der Sicherheitszone bereitgestellt werden, der die jeweiligen externen Geräte zugeordnet sind.

16. Gateway-Komponente zur Durchführung eines Verfahrens nach einem der Ansprüche 1 bis 15, wobei die Gateway-Komponente dafür ausgestaltet ist,
- einer Sicherheitszone eines Kommunikationssystems zugeordnet zu werden, das in mehrere Sicherheitszonen unterteilt ist, die jeweils eine Mehrzahl von physikalisch und/oder logisch miteinander verbundenen Geräten umfassen,
- zur Einräumung eines Zugriffs von externen Geräten außerhalb der Sicherheitszone auf durch zumindest ausgewählte Geräte der Sicherheitszone bereitgestellte Daten und/oder Ressourcen für die externen Geräte und/oder dortige Nutzer Identitätsnachweise sowie Zugriffsberechtigungsnachweise anzufordern und anhand von Sicherheitsrichtlinien zu überprüfen, die definieren, welche Geräte und/oder Nutzer Zugriff auf welche Daten und/oder Ressourcen benötigen,
- Identitätsnachweise und Zugriffsberechtigungsnachweise für zumindest ausgewählte Geräte bereitzustellen, die von der Sicherheitszone umfasst sind, der die Gateway-Komponente zugeordnet ist,
- zwischen zumindest ausgewählten Geräten unterschiedlicher Sicherheitszonen bei erfolgreicher Validierung der Identitätsnachweise und Zugriffsberechtigungsnachweise jeweils kryptographisch geschützte Verbindungen zur Übermittlung von Daten und/oder zum Zugriff auf Ressourcen aufzubauen.
